# EUROPÄISCHE PATENTSCHRIFT

(11) **EP 1 388 678 B1**
(45) Veröffentlichungstag und Bekanntmachung des Hinweises auf die Patenterteilung: **17.05.2006**
(21) Anmeldenummer: 03102010.0
(22) Anmeldetag: 04.07.2003
(51) Int. Cl.: F16C 1/08, A01C 19/00, F16D 1/10

(54) **Kombination aus einem Getriebe und einer flexiblen Antriebswelle**
Combination of a gear and a flexible drive shaft
Combinaison d'une transmission et d'un arbre de commande flexible

(30) Priorität: 08.08.2002 US 214964
(43) Veröffentlichungstag der Anmeldung: 11.02.2004
(73) Patentinhaber: DEERE & COMPANY, Moline, Illinois 61265-8098 (US); Elliott Manufacturing Co. LLC, Binghamton, New York 13902 (US)
(72) Erfinder: Friestad, Michael Eric, IL 61201, Rock Island (US); Hause, Kevin, NY 13904, Binghamton (US)
(74) Vertreter: Holst, Sönke

(56) Entgegenhaltungen:
- EP-A- 0 482 739
- GB-A- 899 733
- GB-A- 1 146 591
- US-A- 2 963 913

## Beschreibung

Die Erfindung betrifft eine Kombination aus einem Getriebe und einer flexiblen Antriebswelle, mit einem Getriebegehäuse, wobei die Antriebswelle ein erstes Verbindungselement und das Getriebegehäuse ein zweites Verbindungselement enthält, an welches das erste Verbindungselement ankoppelbar ist.

Flexible drehbare Antriebswellen werden in verschiedenen Anwendungen eingesetzt, um Drehmomente von einem Ort zu einem anderen zu übertragen. Üblicherweise enthalten flexible drehbare Antriebswellen ein steckerförmiges Verbindungselement, um in ein buchsenförmiges Verbindungselement an einem Getriebe einzugreifen. Wenn das steckerförmige Verbindungselement in einer in das buchsenförmige Verbindungselement eingerückten Stellung ist, steht die flexible drehbare Antriebswelle in einer antreibenden Verbindung zu dem Getriebe. Wenn die Verbindungselemente getrennt werden, dann steht auch die flexible drehbare Antriebswelle nicht mehr in einer antreibenden Verbindung zu dem Getriebe. Demnach besitzen die Verbindungselemente zwei Stellungen, eine vollständig eingerückte Stellung und eine ausgerückte Stellung. Dabei ist es nicht möglich, die flexible Antriebswelle an das Getriebegehäuse zu koppeln, ohne dass die flexible Antriebswelle antreibend mit dem Getriebe verbunden ist.

Die US 2 963 913 A offenbart eine Antriebsvorrichtung für handbetriebene Bohrmaschinen. Die Antriebsvorrichtung umfasst eine Antriebswelle, die mit einem Getriebe in Eingriff bringbar ist, wobei über eine mit der Antriebswelle antreibend verbundene und verschiebbare Getriebebuchse eine Verbindung zwischen der Antriebswelle und einer ersten oder zweiten Abtriebswellen wahlweise einstellbar ist. Durch Verschieben der Getriebebuchse wird eine Antriebsverbindung mit der ersten Abtriebswelle hergestellt und gleichzeitig eine Antriebsverbindung mit der zweiten Abtriebswelle unterbrochen bzw. umgekehrt. Die Unterbrechung des Antriebsstranges durch Trennen von treibenden Getriebeelementen wird als aufwendig angesehen.

Die US 718 664 A, GB 899 733 A und die US 4 779 471 A offenbaren den Einsatz von flexiblen drehbaren Antriebswellen bei landwirtschaftlichen Sämaschinen.

Die der Erfindung zu Grunde liegende Aufgabe wird darin gesehen, eine Kombination aus einem Getriebe und einer Antriebswelle der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Kombination der eingangs genannten Art mit einem ersten Verbindungselement versehen, welches in eine teilweise eingerückte Stellung positionierbar ist, in der die flexible Antriebswelle an das Getriebegehäuse montiert ist, jedoch das Getriebe nicht antreibend mit der flexiblen Antriebswelle verbunden ist. Des Weiteren ist an dem Getriebegehäuse eine Arretiervorrichtung montiert, mit der das erste Verbindungselement wahlweise in einer vollständig eingerückten Stellung oder in der teilweise eingerückten Stellung arretierbar ist.

Es wird ein Verbindungssystem für eine flexible drehbare Antriebswelle geschaffen, wobei das erste Verbindungselement des Verbindungssystems wahlweise in eine vollständig eingerückte Stellung, in der die flexible drehbare Antriebswelle in einer antreibenden Verbindung zu dem Getriebe steht und in eine teilweise eingerückte zweite Stellung positionierbar ist. Die Arretiervorrichtung dient zum Arretieren der Antriebswelle in den jeweils ausgewählten Stellungen.

Das erste Verbindungselement ist ein steckerförmiges Verbindungselement, welches von einem zweiten am Getriebegehäuse positionierten buchsenförmigen Verbindungselement aufgenommen wird.

In einer besonders bevorzugten Ausgestaltung der Erfindung ragt ein Antriebssteckelement axial aus der flexiblen drehbaren Antriebswelle heraus und greift in ein buchsenförmiges Antriebsaufnahmeelement des Getriebes ein, wenn das steckerförmige Verbindungselement in seiner vollständig eingerückten Stellung ist.

Das steckerförmige Verbindungselement enthält zwei Umfangsnuten, welche die vollständig eingerückte Stellung und die teilweise eingerückte Stellung definieren.

Das buchsenförmige Verbindungselement ist mit einem Arretierbolzen versehen, der wahlweise mit der ersten oder zweiten Umfangsnut in Eingriff steht.

Eine O-Ring-Dichtung ist zwischen den beiden Umfangsnuten positioniert.

In beiden eingerückten Stellungen ist das steckerförmige Verbindungsteil an das Getriebe montiert, wobei die O-Ring-Dichtung mit dem buchsenförmigen Verbindungselement in Kontakt steht und das Getriebegehäuse, an welches das steckerförmige Verbindungselement montiert ist, abdichtet.

Der Arretierbolzen ist mit einer Umfangsoberfläche zum Eingreifen in die Umfangsnuten versehen und arretiert die flexible drehbare Antriebswelle gegenüber dem Getriebe, indem sie in die ausgewählte Umfangsnut eingreift. Der Arretierbolzen ist des Weiteren mit einer Ausspaarung zur Entriegelung der flexiblen drehbaren Antriebswelle gegenüber dem Getriebe versehen.

In einer ersten erfindungsgemäßen Ausgestaltung wird die Umfangsoberfläche des Arretierbolzens in eine Eingriffsposition mit den Umfangsnuten hinein- und aus einer Eingriffsposition mit den Umfangsnuten herausgedreht.

In einer zweiten erfindungsgemäßen Ausgestaltung wird die Umfangsoberfläche des Arretierbolzens in eine Eingriffsposition mit den Umfangsnuten hinein- und aus einer Eingriffsposition mit den Umfangsnuten herausgeschoben.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

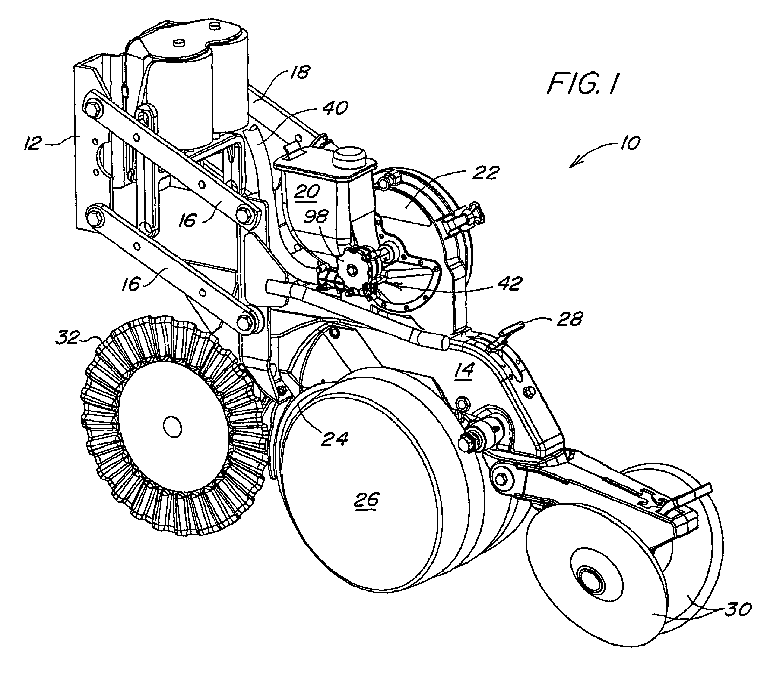

- Fig. 1: eine perspektivische Ansicht einer Sämaschine mit einer einzelnen Pflanzeinheit von hinten,
- Fig. 2: eine Querschnittsansicht eines Getriebes und einer drehbaren Antriebswelle, wobei sich die Antriebswelle in einer teilweise eingerückten Stellung befindet,
- Fig. 3: eine Querschnittsansicht des Getriebes und der drehbaren Antriebswelle, wobei sich die Antriebswelle in einer vollständig eingerückten Stellung befindet,
- Fig. 4: eine Querschnittsansicht eines drehbaren Arretierbolzens und
- Fig. 5: eine Querschnittsansicht eines verschiebbaren Arretierbolzens.

Eine Sämaschine 10 enthält eine einzelne Reihensäeinheit, welche mittels U-förmiger Schrauben, die mit einer Montageplatte 12 in Eingriff stehen, an einen querliegenden Werkzeugträger (nicht gezeigt) montiert ist. Die Säeinheit ist mit einem Rahmen 14 versehen, der über ein Parallelogrammgestänge 16 an die Montageplatte 12 gekoppelt ist. Das Parallelogrammgestänge erlaubt ein begrenztes Heben und Senken der Säeinheit relativ zum Werkzeugträger. Durch ein pneumatisches bedarfsgesteuertes Saatgutabgabesystem wird automatisch Saatgut zu der Säeinheit geleitet. Das bedarfsgesteuerte Saatgutabgabesystem leitet das Saatgut pneumatisch von einem Haupttrichter (nicht gezeigt) durch eine Saatgutleitung 18 zu einen auf dem Rahmen 14 montierten Hilfsbehälter 20. Das im Hilfsbehälter 20 befindliche Saatgut wird mittels einer Dosiervorrichtung 22 dosiert und durch ein Saatgutrohr in eine Säfurche geleitet (nicht gezeigt).

Die Säfurche wird durch einen Doppelscheiben-Furchenöffner 24 mit tiefeneinstellbaren Rädern 26 geformt. Die Tiefe der Säfurche wird durch Positionierung des Hebels 28 eingestellt, mit dem die vertikale Position der tiefeneinstellbaren Räder 26 relativ zum Furchenöffner 24 regulierbar ist. Die Säfurche mit dem durch das Saatgutrohr darin abgelegten dosierten Saatgut wird mittels Furchenschließrädern 30 geschlossen. Ein davor montiertes Scheibensech 32 dient zur Zerkleinerung von Pflanzenrückständen bevor diese auf den Furchenöffner 24 treffen.

Die Dosiervorrichtung 22 wird durch eine flexible drehbare Antriebswelle 40, welche ein Getriebe 42 antreibt, angetrieben. Die flexible und drehbare Antriebswelle 40 entspricht einer Ausführung, wie sie von der Elliot Manifacturing Company, LLC, Bermingham, New York hergestellt und vermarktet wird. Ein durch Bodenhaftung angetriebenes Getriebe (nicht gezeigt) liefert ein Eingangsdrehmoment an die flexible Antriebswelle 40. Auf diese Weise wird die Drehzahl der Dosiervorrichtung 22 durch die Fahrgeschwindigkeit der Sämaschine 10 gesteuert. Die flexible drehbare Antriebswelle enthält eine flexible Ummantelung und einen drehbaren inneren Kern. Das Ende der flexiblen drehbaren Antriebswelle 40 ist mit einem steckerförmigen Verbindungselement 44 versehen, welches eine Einsteckhülse 46 und ein mit einer planen Fläche versehenes drehbares Antriebssteckelement 48 enthält. Die Einsteckhülse 46 ist als Metallbuchse ausgebildet, wobei die Metallbuchse eine erste Umfangsnut 50 und eine zweite Umfangsnut 52 enthält. Zwischen den beiden Umfangsnuten 50, 52 ist ein O-Ring 54 positioniert.

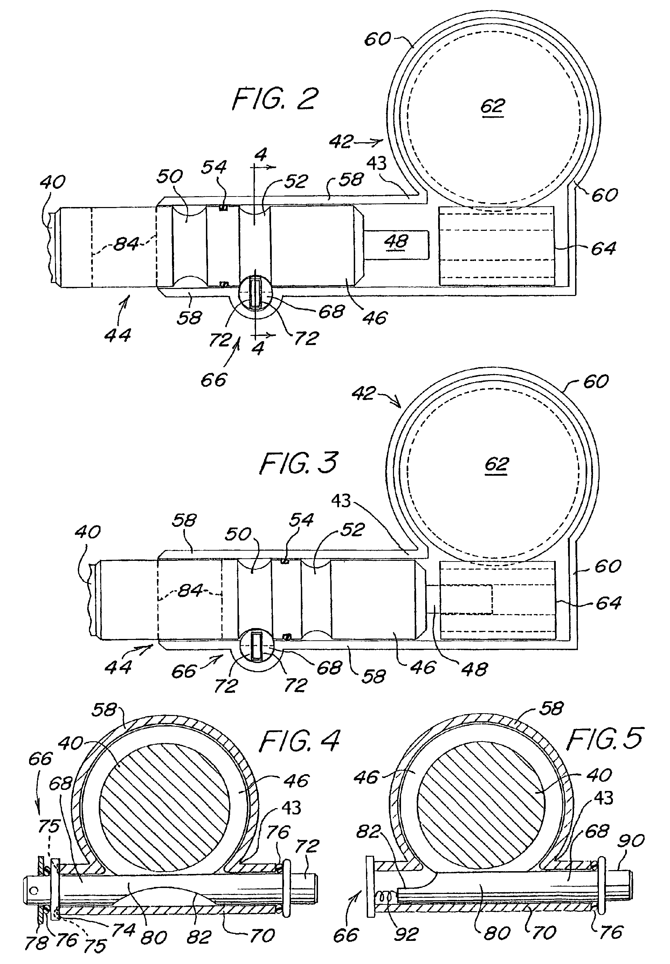

Das Getriebe 42 enthält ein Getriebegehäuse 43 mit einem Einsteckbereich 58, der die Einsteckhülse 46 aufnimmt und einem Zahnradbereich 60, der Zahnräder 62, 64 aufnimmt. In dem Zahnradbereich 60 des Gehäuses 43 sind zwei schrägverzahnte Zahnräder 62, 64 montiert. Das erste schrägverzahnte Zahnrad 62 ist antreibend mit der Dosiervorrichtung 22 gekoppelt. Das zweite schrägverzahnte Zahnrad 64 ist antreibend mit dem ersten schrägverzahnten Zahnrad 62 gekoppelt. Das zweite schrägverzahnte Zahnrad 64 ist mit einer mehrkantigen Bohrung versehen, welche das Antriebssteckelement 48 der flexiblen drehbaren Antriebswelle 40 aufnimmt. Wenn die Antriebswelle 40 in ihrer vollständig eingerückten Position ist, wie es in Fig. 3 dargestellt wird, wird das zweite schrägverzahnte Zahnrad 64 von der flexiblen drehbaren Antriebswelle 40 angetrieben.

Der zylindrische Einsteckbereich 58 ist mit einer Arretiervorrichtung 66 versehen, welche einen querverlaufenden Bolzen 68 enthält. In dem in Figur 2 bis 4 dargestellten Ausführungsbeispiel ist der Bolzen drehbar in einer Querbohrung 70 positioniert, die sich im Einsteckbereich 58 des Getriebegehäuses 43 befindet. Der Bolzen 68 enthält ein erstes Ende, mit zwei Greifflächen 72 zum Erfassen durch einen Bediener und ein zweites Ende, mit einem Querbolzen 74, welcher mittels komprimierbarer und elastischer O-Ringe 76 und einer Scheibe 78 gegen die Querbohrung 70 vorgespannt ist. Das Ende der Querbohrung 70 nahe dem Querbolzen 74 ist mit Einrastkerben 75 versehen. Die Einrastkerben 75 sind auf beiden Seiten der Querbohrung 70 derart angeordnet, dass eine einzige Arretierposition für den Bolzen 68 geschaffen ist und der Bolzen 68 in eine Sperr- oder Freigabestellung gedreht werden kann. Um den Bolzen 68 in eine der Stellungen zu bewegen, greift ein Bediener an die Greifflächen 72 und drückt den Bolzen 68 nach innen, um die O-Ringe 76 zu komprimieren und den Querbolzen 74 aus den Einrastkerben 75 zu lösen. Der Bolzen 68 wird dann in die gewünschte Stellung gedreht, in welcher er durch den Querbolzen 74 und die Einrastkerben 75 arretiert wird.

Der Bolzen 68 enthält eine Umfangsoberfläche 80, welche die Sperrstellung definiert, und einen ausgesparten Bereich 82, welcher die Freigabestellung definiert. In der Sperrstellung greift die Umfangsoberfläche 80 in eine der ersten oder zweiten Umfangsnuten 50, 52 ein und verriegelt die drehbare Antriebswelle 40 entweder in ihrer vollständig eingerückten Stellung oder in ihrer teilweise ausgerückten Stellung. In der Freigabestellung gibt der ausgesparte Bereich 82 die Einsteckhülse 46 frei und erlaubt eine axiale Verschiebung der Einsteckhülse 46 innerhalb des Einsteckbereichs 58 des Getriebegehäuses 43 bis diese in ihrer ausgewählten Stellung verriegelt wird. Um eine Positionierung der Einsteckhülse 46 innerhalb des Einsteckbereichs 58 des Getriebegehäuses 43 zu vereinfachen, ist die Einsteckhülse 46 mit sichtbaren Markierungen 84 versehen. Wenn die Markierungen 84 mit dem Rand des Einsteckbereichs 58 des Getriebegehäuses 43 ausgerichtet sind, befindet sich eine der ersten oder zweiten Umfangsnuten 50, 52 der Einsteckhülse 46 für einen Eingriff der Umfangsfläche 80 des Bolzens 68 in einer korrekten axialen Stellung.

In einer alternativen Ausgestaltung ist der drehbare Bolzen 68 durch einen Schiebebolzen 90 ersetzt. Der Schiebebolzen 90 ist in der Querbohrung 70 positioniert und in einer Eingriffsposition bezüglich der Umfangsnuten 50, 52 durch eine Feder 92 vorgespannt. Wie auch der drehbare Bolzen 68, enthält der Schiebebolzen 90 eine Umfangsoberfläche 80 und einen ausgesparten Bereich 82. Um die Einsteckhülse 46 zu lösen, wird der Schiebebolzen 90 herausgezogen, bis der ausgesparte Bereich 92 die Umfangsnuten 50, 52 derart erfasst, dass die drehbare Antriebswelle 40 in dem Einsteckbereich 58 des Getriebegehäuses 43 axial verschoben werden kann.

Die Einsteckhülse 46 bildet das steckerförmige Verbindungselement, welches in das durch den Einsteckbereich 58 des Getriebes 42 ausgebildete buchsenförmige Verbindungselement eingreift. Die erste Umfangsnut 50 definiert die vollständig eingerückte Stellung der flexiblen drehbaren Antriebswelle 40. In der vollständig eingerückten Stellung ist die flexible drehbare Antriebswelle 40 antreibend mit dem Getriebe 42 zum Antrieb der Dosiervorrichtung 22 verbunden. Die zweite Umfangsnut 52 definiert die teilweise ausgerückte Stellung der flexiblen drehbaren Antriebswelle 40. In der teilweise ausgerückten Stellung ist die flexible drehbare Antriebswelle 40 an den Einsteckbereich 58 des Getriebegehäuses 43 gekoppelt, aber nicht antreibend an das zweite schrägverzahnte Zahnrad 64 gekoppelt, wie es in Fig. 2 dargestellt ist. In beiden Stellungen steht der zwischen den Umfangsnuten 50, 52 positionierte O-Ring 54 mit der Innenwand des Einsteckbereichs 58 des Getriebegehäuses 43 in Eingriff und dichtet das Getriebegehäuse 43 gegenüber außenliegenden Elementen ab. In einer vollständig ausgerückten Stellung ist die flexible drehbare Antriebswelle 40 aus dem Getriebe 42 entfernt.

Für ein manuelles Drehen der Dosiervorrichtung 22 ist ein Bedienungsknauf 98 am Getriebe 42 montiert. Zusätzlich kann dieser Knauf dazu genutzt werden, das zweite schrägverzahnte Zahnrad 64 derart zu bewegen, dass es das Antriebssteckelement 48 erfasst, wenn dieses in das Getriebegehäuse 43 hineingesteckt wird.

## Patentansprüche

1. Kombination aus einem Getriebe (42) und einer flexiblen Antriebswelle (40), mit einem Getriebegehäuse (43), wobei die Antriebswelle (40) ein erstes Verbindungselement (44) und das Getriebegehäuse (43) ein zweites Verbindungselement (58) enthält, an welches das erste Verbindungselement (43) ankoppelbar ist, **dadurch gekennzeichnet, dass** das erste Verbindungselement (44) in eine teilweise eingerückte Stellung positionierbar ist, in der die flexible Antriebswelle (40) an das Getriebegehäuse (43) montiert ist, jedoch die Antriebswelle (40) nicht antreibend mit dem Getriebe (42) verbunden ist, und dass an dem Getriebegehäuse (43) eine Arretiervorrichtung (66) montiert ist, mit der das erste Verbindungselement (44) wahlweise in einer vollständig eingerückten Stellung oder in der teilweise eingerückten Stellung arretierbar ist.

2. Kombination nach Anspruch 1, **dadurch gekennzeichnet, dass** das erste Verbindungselement (44) eine erste Umfangsnut (50), welche die vollständig eingerückte Stellung definiert und eine zweite Umfangsnut (52) enthält, welche die teilweise eingerückte Stellung definiert.

3. Kombination nach Anspruch 1 oder 2, **dadurch gekennzeichnet, dass** die Arretiervorrichtung (66) einen an das Getriebegehäuse (43) montierten Bolzen (68) enthält, welcher wahlweise mit der ersten oder zweiten Umfangsnut (50,52) in Eingriff steht.

4. Kombination nach einem der vorhergehenden Ansprüche, **dadurch gekennzeichnet, dass** das erste Verbindungselement (44) ein steckerförmiges Verbindungselement enthält, welches hineinschiebbar in dem als buchsenförmiges Verbindungselement ausgebildeten zweiten Verbindungselement (58) aufgenommen wird.

5. Kombination nach einem der Ansprüche 2 bis 4, **dadurch gekennzeichnet, dass** zwischen der ersten und der zweiten Umfangsnut (50, 52) ein O-Ring (54) positioniert ist, welcher mit dem ersten und dem zweiten Verbindungselement (44, 58) in Kontakt steht, während sich das erste Verbindungselement (44) in der vollständig eingerückten und in der teilweise eingerückten Stellung befindet.

6. Kombination nach einem der Ansprüche 3 bis 5, **dadurch gekennzeichnet, dass** der Bolzen (68) drehbar an das Getriebegehäuse (43) montiert ist, wobei der Bolzen (68) mit einer Umfangsoberfläche (80) für den Eingriff mit der ersten oder zweiten Umfangsnut (50, 52) zum Arretieren der flexiblen Antriebswelle (40) am Getriebegehäuse (43) versehen ist, wobei die Umfangsoberfläche (80) eine Arretierstellung für den Bolzen (68) definiert, wobei der Bolzen (68) des Weiteren mit einer Ausspaarung (82) versehen ist, welche dem ersten Verbindungselement (44) ermöglicht relativ zum zweiten Verbindungselement (58) verschoben zu werden, und wobei die Ausspaarung (82) eine Freigabestellung für den Bolzen (68) definiert.

7. Kombination nach einem der vorhergehenden Ansprüche, **dadurch gekennzeichnet, dass** das erste Verbindungselement (44) mit einer sichtbaren Anzeige (84) versehen ist, welche die teilweise eingerückte Stellung des ersten Verbindungselements (44) relativ zum zweiten Verbindungselement (58) anzeigt.

8. Kombination nach einem der Ansprüche 3 bis 7, **dadurch gekennzeichnet, dass** der Bolzen (68) mit einem Querbolzen (74) versehen ist, welcher in einer am Getriebegehäuse (43) ausgebildeten Einrastvorkehrung (75) lagerbar ist, wenn sich der Bolzen (68) in seiner Arretierstellung und in seiner Freigabestellung befindet.

9. Kombination nach einem der Ansprüche 3 bis 8, **dadurch gekennzeichnet, dass** der Bolzen (68) ein erstes Ende mit daran ausgebildeten Greifflächen (72) zum Erfassen durch einen Bediener und ein zweites Ende mit einer Scheibe (78) enthält, wobei zwischen der Scheibe (78) und dem Getriebegehäuse (43) ein O-Ring (76) positioniert ist, welcher den Querbolzen (74) des Bolzens (68) in die Einrastvorkehrung (75) vorspannt.

10. Kombination nach einem der Ansprüche 3 bis 9, **dadurch gekennzeichnet, dass** der Bolzen (68) ein Schiebebolzen (90) ist und verschiebbar an das Getriebegehäuse (43) montiert ist.

11. Kombination nach einem der Ansprüche 3 bis 10, **dadurch gekennzeichnet, dass** eine Feder (92) den Schiebebolzen (90) in seine Arretierstellung vorspannt.

12. Landwirtschaftliche Sämaschine zum Pflanzen eines pflanzlichen Produktes, wobei die Sämaschine (10) einen Rahmen (12), eine zur Dosierung eines zu pflanzenden Saatguts an den Rahmen (12) montierte Dosiervorrichtung (22), einen zur Ausbildung einer Saatfurche auf einem Feld, in welche dosiertes Saatgut von der Dosiervorrichtung (22) abgegeben wird, an den Rahmen (12) montierten Furchenöffner (24) und eine Kombination aus einem Getriebe (42) und einer flexiblen Antriebswelle (44) gemäß einem der Ansprüche 1 bis 11 enthält, durch welche die Dosiervorrichtung (22) angetrieben wird.

## Revendications

1. Combinaison d'une transmission (42) et d'un arbre d'entraînement (40) flexible, avec un carter de transmission (43), l'arbre d'entraînement (40) contenant un premier élément de liaison (44) et le carter de transmission (43) un second élément de liaison (58), auquel le premier élément de liaison (43) peut être couplé, **caractérisée en ce que** le premier élément de liaison (44) peut être positionné dans une position partiellement engagée, dans laquelle l'arbre d'entraînement (40) flexible est monté sur le carter de transmission (43), mais l'arbre d'entraînement (40) n'étant pas relié par entraînement à la transmission (42), et **en ce qu'**un dispositif d'arrêt (66), avec lequel le premier élément de liaison (44) peut être arrêté au choix dans une position complètement engagée ou dans la position partiellement engagée, est monté sur le carter de transmission (43).

2. Combinaison selon la revendication 1, **caractérisée en ce que** le premier élément de liaison (44) contient une première rainure périphérique (50), qui définit la position complètement engagée et contient une seconde rainure périphérique (52) qui définit la position partiellement engagée.

3. Combinaison selon la revendication 1 ou 2, **caractérisée en ce que** le dispositif d'arrêt (66) contient un boulon (68) monté sur le carter de transmission (43), qui est en prise au choix avec la première ou la seconde rainure périphérique (50, 52).

4. Combinaison selon l'une quelconque des revendications précédentes, **caractérisée en ce que** le premier élément de liaison (44) contient un élément de liaison en forme de fiche, qui est réceptionné en pouvant être introduit dans le second élément de liaison (58) conçu comme un élément de liaison en forme de douille.

5. Combinaison selon l'une quelconque des revendications 2 à 4, **caractérisée en ce que** entre la première et la seconde rainures périphériques (50, 52) est positionné un joint torique (54), qui est en contact avec le premier et le second éléments de liaison (44, 58), alors que le second élément de liaison (44) se trouve dans la position complètement engagée et dans la position partiellement engagée.

6. Combinaison selon l'une quelconque des revendications 3 à 5, **caractérisée en ce que** le boulon (68) est monté de façon rotative sur le carter de transmission (43), le boulon (68) étant doté d'une surface périphérique (80) pour l'engagement avec la première ou la seconde rainure périphérique (50, 52) pour l'arrêt de l'arbre d'entraînement (40) flexible sur le carter de transmission (43), la surface périphérique (80) définissant une position d'arrêt pour le boulon (68), le boulon (68) étant doté également d'un évidement (82) qui permet au premier élément de liaison (44) d'être déplacé par rapport au second élément de liaison (58), et l'évidement (82) définissant une position de libération pour le boulon (68).

7. Combinaison selon l'une quelconque des revendications précédentes, **caractérisée en ce que** le premier élément de liaison (44) est doté d'un affichage (84) visible, qui indique la position partiellement engagée du premier élément de liaison (44) par rapport au second élément de liaison (58).

8. Combinaison selon l'une quelconque des revendications 3 à 7, **caractérisée en ce que** le boulon (68) est doté d'un boulon transversal (74), qui peut être logé dans une disposition d'engagement (75) réalisée sur le carter de transmission (43) lorsque le boulon (68) se trouve dans sa position d'arrêt et dans sa position de libération.

9. Combinaison selon l'une quelconque des revendications 3 à 8, **caractérisée en ce que** le boulon (68) contient une première extrémité avec des surfaces de préhension (72) réalisées dessus pour la saisie par un opérateur et une seconde extrémité avec un disque (78), un joint torique (76), qui précontraint le boulon transversal (74) du boulon (68) dans la position d'engagement (75), étant positionné entre le disque (78) et le carter de transmission (43).

10. Combinaison selon l'une quelconque des revendications 3 à 9, **caractérisée en ce que** le boulon (68) est un boulon coulissant (90) et est monté de façon déplaçable sur le carter de transmission (43).

11. Combinaison selon l'une quelconque des revendications 3 à 10, **caractérisée en ce qu'**un ressort (92) précontraint le boulon coulissant (90) dans sa position d'arrêt.

12. Machine à semer agricole pour planter un produit végétal, la machine à semer (10) contenant un cadre (12), un dispositif de dosage (22) monté sur le cadre (12) pour le dosage d'une semence à planter, un ouvreur de sillon (24) monté sur le cadre (12) pour réaliser un sillon de semence dans un champ, dans lequel de la semence dosée est distribuée par le dispositif de dosage, et une combinaison d'une transmission (42) et d'un arbre d'entraînement (44) flexible selon l'une quelconque des revendications 1 à 11, par lequel le dispositif de dosage (22) est entraîné.

## Claims

1. Combination of a transmission (42) and a flexible drive shaft (40), having a transmission housing (43), the drive shaft (40) containing a first coupling element (44) and the transmission housing (43) containing a second coupling element (58), to which the first coupling element (43) can be coupled, **characterised in that** the first coupling element (44) can be positioned in a partially engaged position in which the flexible drive shaft (40) is mounted on the transmission housing (43), but the drive shaft (40) is not coupled to the transmission (42) in a driving manner, and **in that** a locking device (66) is mounted on the transmission housing (43), with which locking device the first coupling element (44) can be locked optionally in a completely engaged position or in the partially engaged position.

2. Combination according to claim 1, **characterised in that** the first coupling element (44) contains a first circumferential groove (50) which defines the completely engaged position and a second circumferential groove (52) which defines the partially engaged position.

3. Combination according to claim 1 or 2, **characterised in that** the locking device (66) contains a bolt (68) which is mounted on the transmission housing (43), which bolt is in engagement optionally with the first or second circumferential groove (50, 52).

4. Combination according to one of the preceding claims, **characterised in that** the first coupling element (44) contains a plug-shaped coupling element which is received in the second coupling element (58), which has a bush-shaped configuration, so as to be able to be pushed in.

5. Combination according to one of the claims 2 to 4, **characterised in that**, between the first and the second circumferential groove (50, 52), an O-ring (54) is positioned which is in contact with the first and the second coupling element (44, 58) whilst the first coupling element (44) is situated in the completely engaged and in the partially engaged position.

6. Combination according to one of the claims 3 to 5, **characterised in that** the bolt (68) is mounted rotatably on the transmission housing (43), the bolt (68) being provided with a circumferential surface (80) for engagement with the first or second circumferential groove (50, 52) in order to lock the flexible drive shaft (40) on the transmission housing (43), the circumferential surface (80) defining a locking position for the bolt (68), the bolt (68) being furthermore provided with a recess (82) which permits the first coupling element (44) to be displaced relative to the second coupling element (58) and the recess (82) defining a releasing position for the bolt (68).

7. Combination according to one of the preceding claims, **characterised in that** the first coupling element (44) is provided with a visible display (84) which displays the partially engaged position of the first coupling element (44) relative to the second coupling element (58).

8. Combination according to one of the claims 3 to 7, **characterised in that** the bolt (68) is provided with a transverse pin (74) which can be mounted in a detent (75) configured on the transmission housing (43) when the bolt (68) is situated in its locking position and in its releasing position.

9. Combination according to one of the claims 3 to 8, **characterised in that** the bolt (68) contains a first end with gripping faces (72) configured thereon for gripping by an operator and a second end with a disc (78), an O-ring (76) being positioned between the disc (78) and the transmission housing (43), which O-ring prestresses the transverse pin (74) of the bolt (68) into the detent (75).

10. Combination according to one of the claims 3 to 9, **characterised in that** the bolt (68) is a push bolt (90) and is mounted displaceably on the transmission housing (43).

11. Combination according to one of the claims 3 to 10, **characterised in that** a spring (92) prestresses the push bolt (90) into its locking position.

12. Agricultural sowing machine for planting a vegetable product, the sowing machine (10) containing a frame (12), a metering device (22) which is mounted on the frame (12) for metering seed which is to be planted, a furrow opener (24) which is mounted on the frame (12) for configuring a seed furrow in a field into which seed furrow metered seed is discharged from the metering device (22), and a combination of a transmission (42) and a flexible drive shaft (44) according to one of the claims 1 to 11, by means of which the metering device (22) is driven.
